**Europäisches Patentamt**

**European Patent Office**

**Office européen des brevets**

(19)

(11) Veröffentlichungsnummer: **0 167 116**
**B1**

(12) **EUROPÄISCHE PATENTSCHRIFT**

(45) Veröffentlichungstag der Patentschrift: **04.04.90**

(51) Int. Cl.⁵: **F 16 L 33/04**

(21) Anmeldenummer: **85107981.4**

(22) Anmeldetag: **27.06.85**

(54) **Schlauchschelle mit Spannschloss.**

(30) Priorität: **30.06.84 DE 8419624 u**

(43) Veröffentlichungstag der Anmeldung:
**08.01.86 Patentblatt 86/02**

(45) Bekanntmachung des Hinweises auf die
Patenterteilung:
**04.04.90 Patentblatt 90/14**

(84) Benannte Vertragsstaaten:
**AT BE CH DE FR GB IT LI NL SE**

(56) Entgegenhaltungen:
**EP-A-0 012 680**
**DE-A-2 800 824**
**DE-A-2 842 408**
**DE-A-3 130 112**
**DE-B-1 256 014**
**DE-U-1 880 182**
**DE-U-1 960 560**
**FR-A-1 263 975**
**US-A-2 825 113**

(73) Patentinhaber: **Kurt Allert GmbH & Co KG**
**Austrasse 36**
**D-7238 Oberndorf/Neckar (DE)**

(72) Erfinder: **Allert, Kurt**
**Panoramaweg 3**
**D-7238 Oberndorf (DE)**

(74) Vertreter: **König, Oskar, Dr.-Ing. Dipl.-Phys.**
**Klüpfelstrasse 6 Postfach 10 27 33**
**D-7000 Stuttgart 1 (DE)**

Courier Press, Leamington Spa, England.

**Beschreibung**

Die Erfindung betrifft eine Schlauchschelle gemäß dem Oberbegriff des Anspruches 1.

Bei einer bekannten Schlauchschelle dieser Art (DE-U-1 960 560) weist der Gehäuseboden des Gehäuses seines Spannschlosses zwei zueinander parallele Querschlitze auf, die zur Verankerung des an dem Spannschloß gehaltenen Spannbandendbereichs unter Bildung einer U-förmigen Ausbiegung des Spannbandendbereiches durchdrungen sind. Die Montage dieses so geformten Spannbandendbereiches am Gehäuseboden ist jedoch schwierig und kostenaufwendig.

Es ist deshalb Aufgabe der Erfindung, eine Schlauchschelle der eingangs genannten Art zu schaffen, bei der der Spannbandendbereich am Gehäuseboden auf baulich einfache Weise gehalten ist, die äußerst einfache und kostengünstige Montage ermöglicht und sich dennoch für hohe Spannkräfte eignet.

Diese Aufgabe wird erfindungsgemäß durch eine Schlauchschelle gemäß Anspruch 1 gelöst.

Der in dem Querschlitz des Gehäusebodens des Spannschlosses befindliche, durch zwei gegensinnige Abwinkelungen abgekröpfte Bereich des Spannbandes kann über die volle Breite des Spannbandes auf diesen Endbereich des Spannbandes beim Spannen des Spannbandes einwirkende Spannkräfte auf den Gehäuseboden übertragen, auch bei sehr großen Spannkräften, da der Quersteg nicht aus dem Querschlitz herausgelangen kann, weil der durch ihn hindurchgeführte Endbereich des Spannbandes gegen Wegschwenken vom Gehäuseboden formschlüssig gehalten ist.

Die erfindungsgemäße Schlauchschelle läßt besonders hohe Spannkräfte auf den Gehäuseboden übertragen und es besteht nicht die Gefahr des Ausreißens der Verankerung des Spannbandes am Gehäuseboden. Da das Spannband an seiner mit der Spannschnecke zusammenwirkenden Verzahnung durch diese Verzahnung meist geschwächt ist, kommt es eher zum Ausreißen der Verzahnung des Spannbandes als zum Ausreißen der Verankerung des Spannbandes am Gehäuseboden. Die erfindungsgemäße Maßnahme ermöglicht also die Anwendung besonders hoher Spannkräfte des Spannbandes ohne Gefahr des Ausreißens der Verankerung des Spannbandes am Gehäuseboden. Dabei ist die erfindungsgemäße Maßnahme baulich einfach und kostengünstig und äußerst betriebssicher. Auch die Montage des Spannbandes am Gehäuseboden läßt sich äußerst einfach und kostengünstig durchführen, da infolge des einzigen Querschlitzes des Gehäusebodens man in ihn das Spannband, ohne es dabei biegen zu müssen, einstecken kann. Man braucht dann nur noch den durch den Querschlitz hindurchgeführten Spannbandendbereich gegen Wegschwenken vom Gehäuseboden formschlüssig zu halten. Dies kann zweckmäßig dadurch erfolgen, daß am Gehäuseboden ein schmaler Lappen mit dem Gehäuseboden einstückig angeordnet ist, der durch eine lochförmige Ausstanzung des Spannbandes hindurchgeführt und auf die Spannbandoberseite umgebogen wird. Dieser Lappen braucht jedoch am Übertragen der Spannkraft des Spannbandes auf den Gehäuseboden überhaupt nicht teilzunehmen, so daß er ohne weiteres das ihm zugeordnete Loch des Spannbandes mit allseitigem Spiel in ihm durchdringen kann, was sogar besonders zweckmäßig ist. Er braucht also nur dazu zu dienen, den am Gehäuseboden verankerten Spannbandendbereich gegen Hochschwenken vom Gehäuseboden zu sichern, damit er nicht vom Gehäuseboden wegschwenkt. Diese formschlüssige Sicherung gegen Wegschwenken dieses Spannbandendbereiches vom Gehäuseboden kann auch auf andere Weise bewirkt sein, bspw. oft zweckmäßig durch je eine U-förmige Ausstanzung in den Gehäuselängsseitenwänden — oder nur in einer der beiden Gehäuselängsseitenwände —, wobei die beiden Schenkel des "U" etwa bis zum Übergang von der betreffenden Gehäuselängsseitenwand in den Gehäuseboden reichen und dann der durch das "U" gebildete Lappen der betreffenden Gehäuselängsseitenwand auf das Spannband umgebogen ist. Dieses Spannband braucht dann für diese formschlüssige Sicherung gegen Hochschwenken ebenfalls keine Lochung aufzuweisen, desgleichen nicht, wenn man vorsieht, den am Gehäuseboden gehaltenen Endbereich des Spannbandes um das rückwärtige Ende des Gehäusebodens um ungefähr 180° hakenförmig umzubiegen, was besonders guten Halt des Spannbandes am Gehäuseboden in Verbindung mit der Abkröpfung des Spannbandes ergibt.

Das metallische Spannband kann vorzugsweise aus Stahl bestehen, doch kommen in manchen Fällen auch andere Metalle infrage, wie Messing oder dgl. Das Spannband kann ferner zweckmäßig elastisch biegsam sein. Es ist jedoch auch möglich und in vielen Fällen zweckmäßig, wenn das Spannband im wesentlichen unelastisch biegsam ist.

Die Dicke des Spannbandes kann bspw. zweckmäßig 0,4 bis 1,5 mm und seine Breite zweckmäßig 5 bis 20 mm betragen. Es kann jedoch auch noch größere oder auch geringere Dicken und Breiten aufweisen.

In der Zeichnung sind Ausführungsbeispiele der Erfindung dargestellt. Es zeigen:

Fig. 1 eine ausschnittsweise Seitenansicht einer Schlauchschelle gemäß dem Ausführungsbeispiel der Erfindung bei geschlossenem Klappdeckel,

Fig. 2 eine Seitenansicht der Schlauchschelle entsprechend Fig. 1, jedoch bei geöffnetem Klappdeckel,

Fig. 3 einen Teilschnitt durch das Spannschloßgehäuse der Fig. 2, gesehen entlang der Schnittlinie 3-3, in vergrößerter Darstellung, wobei auch der am Gehäuseboden verankerte Endbereich des Spannbandes mit dargestellt ist,

Fig. 4 einen Schnitt durch Fig. 3, gesehen entlang der Schnittlinie 4-4,

Fig. 5 und 6 Teilschnitte ähnlich dem nach Fig. 4 durch Spannschloßgehäuse mit am Gehäuseboden verankerten Spannbandendbereichen gemäß weiterer Ausführungsbeispiele der Erfindung.

Die in der Zeichnung dargestellte Schlauchschelle 10 weist einen Schnellverschluß in Form eines Schnellspannschlosses 11 auf, das aus einem Gehäuse 12 und einem Klappdeckel 13 mit im Klappdeckel 13 drehbar gelagerter Spannschnecke 14 besteht. Das eine übliche Schrägverzahnung aufweisende Spannband 17 ist mit seinem einen Endbereich 19 am Gehäuseboden 18 des in Vorderansicht U-förmigen Gehäuses 12 verankert. Diese Verankerung weist einen Querschlitz 26 im Gehäuseboden 18 auf, dessen Länge etwas größer als die über die ganze Länge des Spannbandes 17 konstante Breite dieses Spannbandes 17 ist. Die Breite dieses Querschlitzes 26 ist etwas größer als die konstante Dicke des Spannbandes. Dieser Querschlitz 26 erstreckt sich senkrecht zur Längsrichtung des Spannbandes 17 und dient der formschlüssigen Verankerung dieses Spannbandendbereiches 19 in der Weise, indem dieser Spannbandendbereich an diesem Querschlitz 26 eine Abkröpfung (Kröpfung) 23 aufweist, die durch zwei gegensinnige, rechtwinklige, sich über die volle Breite des hier ungelochten Spannbandes erstreckende Abwinklungen des Spannbandes gebildet ist, deren Abstand voneinander ungefähr der Dicke des Gehäusebodens 18 und damit ungefähr der Höhe des Querschlitzes 26 entspricht. Hierdurch kommt in diesen Querschlitz 26 der durch die Abkröpfung 23 gebildete Quersteg 24 des Spannbandes zu liegen, der ungefähr senkrecht zur Längsrichtung des Gehäusebodens 18 gerichtet ist. Dieser Quersteg 24 hat also dieselbe Breite und Dicke wie die an ihn angrenzenden Längsbereiche 21 und 22 des Spannbandes, von denen der von dem freien Ende 19' dieses Spannbandendbereiches 19, bezogen auf den Quersteg 24, abgewendete Längsbereich 22 an der Unterseite 45 des Gehäusebodens 18 und der vom Quersteg 24 zu diesem freien Ende 19' führende Längsbereich 21 auf der im Gehäuseinneren befindlichen Oberseite 46 des Gehäusebodens aufliegt.

Das U-förmige Gehäuse 12 des Spannschlosses weist zwei Längsseitenwände 38, 39 auf, die zueinander parallel verlaufen und zum Gehäuseboden 18 rechtwinklig abgewinkelt sind. Der lichte Innenraum zwischen ihnen hat eine Breite, die etwas größer als die Breite des Spannbandes 17 ist. Der Querschlitz 26 im Gehäuseboden erstreckt sich von der einen Längsseitenwand 38 bis zur anderen Längsseitenwand 39, so daß das Spannband 17 ihn auf seiner vollen Breite durchdringen kann. Solange das Spannband 17 nicht gespannt ist, liegt der Quersteg 24 locker im Querschlitz 26 des Gehäusebodens 18. Wenn dagegen das Spannband gespannt wird, dann wird der Spannbandendbereich 19 in Richtung des Pfeiles A gezogen und hierdurch wird der Quersteg 24, dieses Spannband hierdurch am Gehäuseboden 18 haltend, an die bezogen auf Fig. 4 rechte Längsseitenwand 28 des Querschlitzes 26 angedrückt und überträgt hierdurch die gesamte auf diesen Endbereich 19 in Richtung des Pfeiles A ausgeübte Spannkraft auf den Gehäuseboden 18, so daß hierdurch die zum Halten des Spannbandes 17 bei dessen Spannen erforderliche zugfeste Verbindung zwischen dem Spannbandendbereich 19 und dem Gehäuseboden 18 durch den den Querschlitz 26 durchdringenden abgekröpften Bereich 23 des Spannbandendbereiches 19 bewirkt wird.

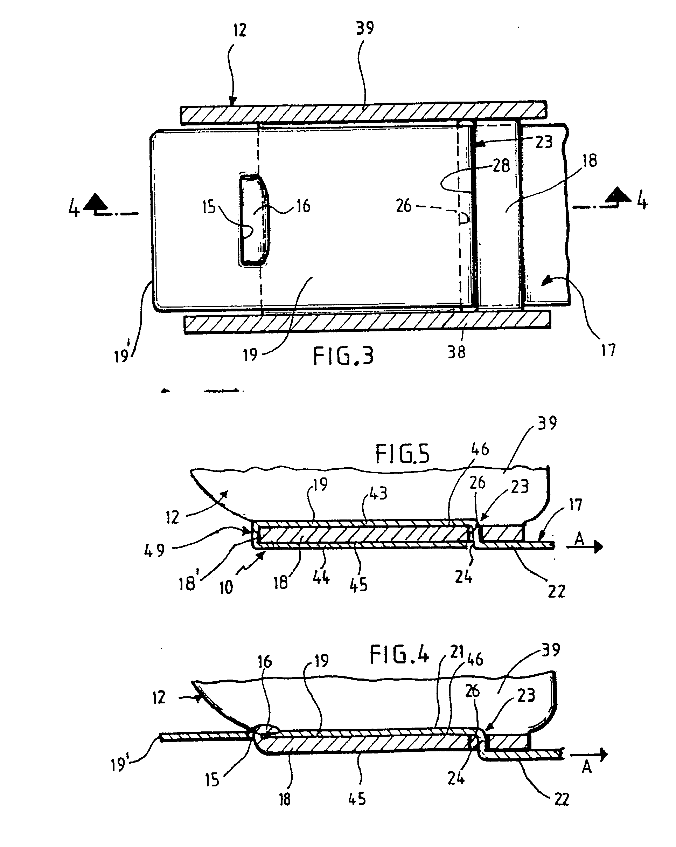

Da der abgekröpfte Bereich 23 des Spannbandendbereiches 19 mit dem Gehäuseboden 18 nicht fest verbunden ist, ist noch eine Sicherung gegen Wegschwenken des Spannbandendbereiches 19 vom Gehäuseboden 18 vorhanden, die also praktisch nur dazu dient, sicherzustellen, daß der Quersteg 24 im Querschlitz 26 verbleibt. Diese Sicherung besteht in diesem Ausführungsbeispiel aus einem Lappen 16, der einstückig an dem Gehäuseboden 18 mit angeformt ist, und zwar an seinem dem Ende 19' des Spannbandendbereiches 19 benachbarten Ende, und dieser Lappen 16 durchdringt eine lochförmige Ausstanzung 15 des Spannbandes und ist auf die Oberseite des auf dem Gehäuseboden 18 aufliegenden Spannbandendbereiches 19, wie in Fig. 3 und 4 dargestellt, umgebogen. Diese Sicherung hat nicht die Aufgabe, Spannkräfte des Spannbandes 17 auf den Gehäuseboden 18 zu übertragen, und deshalb kann der Lappen 16 die Ausstanzung 15 des Spannbandes 17 ohne weiteres mit allseitigem Umfangsspiel durchdringen.

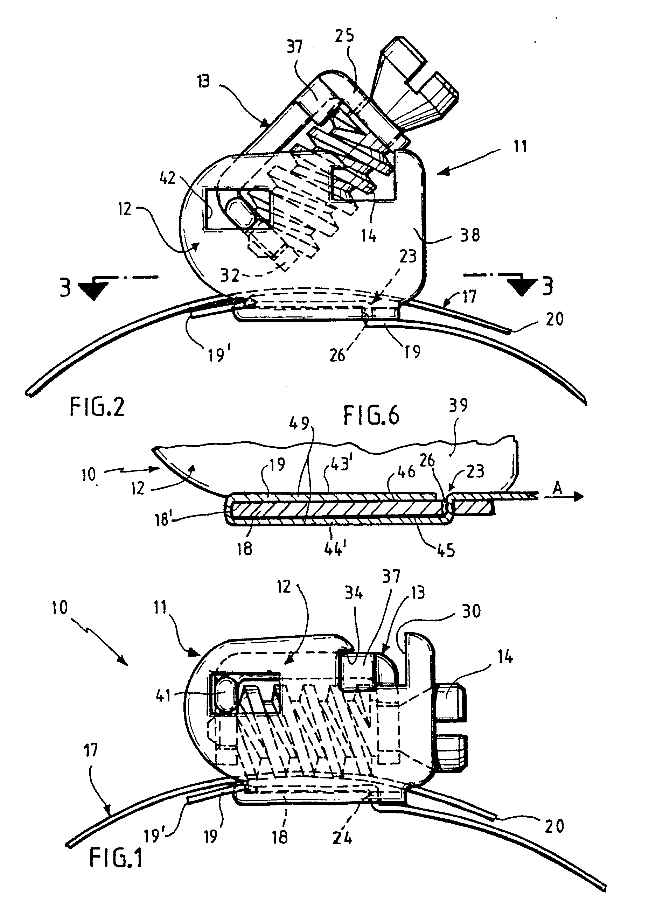

Das Spannband 17 führt von seinem Endbereich 19 aus in einem Kreis zum Gehäuse 12 zurück und das andere freie Ende 20 dieses Spannbandes 17 ist durch das Gehäuse 12 oberhalb des verankerten Spannbandendbereiches 19 hindurchgeführt und man kann so das Spannband bei hochgeklapptem Klappdeckel 13 (Fig. 2) beliebig von Hand durch das Gehäuse 12 hindurchziehen.

Wenn dieses Spannband 17 einen auf einem Stutzen oder dergl. zu befestigenden Schlauch oder dergl. umfaßt, kann man bei hochgeklapptem Klappdeckel 13 das Spannband 17 bereits von Hand so weit wie möglich anziehen, und dann klappt man den Klappdeckel 13 aus der in Fig. 2 dargestellten Offenstellung in die in Fig. 1 dargestellte Geschlossenstellung nach unten, wodurch das Gewinde der Spannschnecke 14 in Eingriff mit der Verzahnung des Spannbandes 17 kommt und nunmehr das Spannband 17 nicht mehr von Hand, sondern nur noch durch Drehen der Spannschnecke 14 bewegt werden kann.

Die Spannschnecke 14 ist im Klappdeckel 13 dadurch drehbar gelagert, indem der Klappdeckel 13 in Seitenansicht U-förmig ausgebildet ist und die Schneckenspitze durchdringt eine Lagerbohrung des rückwärtigen Schenkels 32 dieses Klappdeckels 13 und ferner ist der gegenüber dem Gewinde der Spannschnecke 14 und deren Kopf im Durchmesser verkleinerte Hals der Schnecke 14 in einen untenseitig offenen Lagerschlitz des vorderen Schenkels 25 des Klappdeckels 13 eingesetzt und die diesen Lagerschlitz bildenden beiden Stege sind unterhalb des Halses aufeinander zu gebogen, so daß der Hals in diesem Längsschlitz des vorderen Schenkels 25 drehbar gelagert ist und aus ihm nicht mehr herausgelangen kann. Der Kopf der Schnecke 14 weist einen Schlitz für einen Schraubendreher auf. Auch andere Kopfgestaltungen sind möglich, vorzugsweise mit Innensechskant.

Obenseitig nahe des bezogen auf Fig. 1 rechtsseitigen Gehäuselängsendes weisen die beiden Längsseitenwände 38, 39 des Gehäuses 12 je eine nach oben offene Einbuchtung 30 für von beiden Längsseiten des oberen Mittelsteges des Klappdeckels 13 seitlich abstehende Lappen 37 auf, die bei geschlossenem Klappdeckel 13 in die beiden Einbuchtungen 30 zu liegen kommen.

Der Klappdeckel 13 weist an seinem rückwärtigen Schenkel 32 zwei von diesem Schenkel 32 seitlich abstehende Vorsprünge auf, die Lagerzapfen 41 bilden, die in Langlöcher 42 der beiden Längsseitenwände 38, 39 zur Schwenklagerung und zur längsverschieblichen Lagerung des Klappdeckels 13 eingreifen. Diese beiden Langlöcher 42 erstrecken sich in Längsrichtung des Gehäuses 12, d.h. in der Bewegungsrichtung des Spannbandes 17.

Die beiden Einbuchtungen 30 weisen an ihren dem Schwenklager des Klappdeckels 13 benachbarten Enden je eine rechteckförmige Hinterschneidung 34 für die beiden Lappen 37 auf, in die die beiden Lappen 37 zur Arretierung des Klappdeckels 13, d.h. zur Sicherung gegen unbeabsichtigtes Aufklappen des Klappdeckels 13 eingreifen können.

Wenn man diese Schlauchschelle 10 durch Drehen der Spannschnecke 14 auf dem sie durchdringenden Schlauch spannt, dann zieht das Spannband 17 seine Abkröpfung 23 in Richtung des Pfeiles A, wodurch der Quersteg 24 an die bezogen auf Fig. 4 rechtsseitige Längsseitenwand 28 des Querschlitzes 26, hierdurch diese Spannkraft (Pfeil A) allein oder im wesentlichen auf den Boden 18 des Gehäuses 12 in dessen Längsrichtung übertragend, angepreßt wird. Da das Spannband im Bereich dieses Querschlitzes 26 ungeschwächt ist und diese Abkröpfung sich über die volle Breite des Spannbandes erstreckt, findet hier optimale Übertragung der Spannkraft A auf den Gehäuseboden 18 ohne Gefahr des Ausreißens dieser Verankerung statt.

Der in Fig. 5 dargestellte Teilschnitt durch ein Spannschloßgehäuse 12 mit dem an ihm verankerten Endbereich 19 des zugeordneten Spannbandes 17 unterscheidet sich von dem nach Fig. 4 dadurch, daß am Gehäuseboden 18 der Lappen 16 weggelassen ist und entsprechend dieser Spannbandendbereich 19, der den durch den Querschlitz 26 im Gehäuseboden 18 hindurchreichenden abgekröpften Bereich 23 aufweist, auch nicht die Lochung 15 der Ausführungsform nach Fig. 4 aufweist, sondern wie dargestellt, um das rückwärtige Ende 18' des Gehäusebodens 18 um 180° hakenförmig umgebogen ist. Damit liegt das Spannband 17 mit einem Bereich 43 auf der ungefähr ebenen Oberseite 46 des Gehäusebodens 18 auf und ist dann um das rückwärtige Ende 18' des Gehäusebodens 18 umgebogen und liegt mit dem umgebogenen Bereich 44 an der entsprechend ebenfalls ebenen Unterseite 45 des Gehäusebodens 18 an. Dieser umgebogene Bereich 44 reicht bis ungefähr zu dem Querschlitz 24, so daß dieser umgebogene Bereich 44 des Spannbandes 17 ungefähr mit dem unmittelbar vor der Abkröpfung 23 befindlichen, ebenfalls an der Unterseite 45 des Gehäusebodens 18 anliegenden Bereich 22 des Spannbandes 17 fluchtet. Der Zug, dem der dargestellte Spannbandabschnitt beim Spannen der Schlauchschelle 10 ausgesetzt ist, ist wiederum mit dem Pfeil A bezeichnet. Dieses hakenförmige Umbiegen des Spannbandes 17 um das rückwärtige Ende des Gehäusebodens 18 ergibt auf baulich einfache Weise besonders guten Halt der Abkröpfung 23 im Querschnitt 26 und ermöglicht besonders hohe Spannkräfte in Richtung des Pfeiles A ohne Gefahr des Ablösens des Spannbandendbereiches 19 vom Gehäuseboden 18. Dieses Spannband kann deshalb besonders hohe Kräfte aushalten.

In dem Ausführungsbeispiel nach Fig. 5 wie auch in den Ausführungsbeispielen nach den Fig. 1 bis 3 ist das Spannband 17 jeweils so am Gehäuseboden 18 angeordnet, daß es in Richtung auf das rückwärtige Ende 18' des Gehäusebodens 18 zu den Querschlitz 26 des Gehäusebodens 18 von der Unterseite 45 dieses Gehäusebodens 18 kommend durchdringt. Es ist jedoch auch möglich, wie es in Fig. 6 an einem Ausführungsbeispiel dargestellt ist, das eine Abwandlung des Ausführungsbeispieles nach Fig. 5 zeigt, vorzusehen, daß das Spannband 17 in Richtung auf das rückwärtige Ende 18' des Gehäusebodens 18 zu den Querschlitz 26 des Gehäusebodens 18 von der Oberseite 46 dieses Gehäusebodens 18 kommend durchdringt. In diesem Ausführungsbeispiel ist ferner das Spannband 17 wie im Ausführungsbeispiel nach Fig. 5 um das rückwärtige Ende 18' des Gehäusebodens um 180° umgebogen und kann ebenfalls zweckmäßig bis ungefähr zum Querschlitz 26 des Gehäusebodens reichen. Hierdurch liegt der Spannbandbereich 44' an der Unterseite 45 und der Spannbandbereich 43' an der Oberseite 46 des Gehäusebodens 18 flach an. Bei beiden Ausführungsformen nach Fig. 5 und 6 wird der um 180° umgebogene Endabschnitt 44 bzw. 43' des Spannbandes 17 gegen Aufbiegen im Falle der Ausführungsform nach Fig. 5 durch den vom Spannband 17 umfaßten Schlauch gehindert und in dem Falle der Ausführungsform nach Fig. 6 durch den über dem umgebogenen Bereich 43' des Spannbandes 17 zu liegen kommenden, nicht dargestellten Spannbandbereich, der die mit der betreffenden Spannschnecke kämmende Verzahnung aufweist. Bei diesen Ausführungsformen nach Fig. 5 und 6 kann der durch die Bereiche 43, 44 bzw. 43', 44' und ihre Verbindung bewirkte Haken 49 auch an der Aufnahme von in Richtung des Pfeiles A wirkenden Zugkräften des Spannbandes 17 mitwirken, so daß dann die Zugkraft nicht im wesentlichen allein von der Abkröpfung 23 aufgenommen werden muß sondern auch der Haken 49 hieran erheblich mitwirken kann, was die anwendbaren Zugkräfte noch weiter erhöht. Auch benötigt der Spannbandendbereich 19 keine Lochung und ist damit ungeschwächt. Die umgebogenen Bereiche 44 bzw. 43′ des Spannbandes 17 können zumindest in vielen Fällen auch kürzer als dargestellt sein, bspw. relativ große Abstände vom Querschlitz 26 haben, wodurch Material eingespart wird. Doch sind lange Abschnitte 44 bzw. 43′ des Spannbandes für dessen Verankerung am Gehäuseboden 18 besonders vorteilhaft. Im Falle der Fig. 5 ergibt sich auch besonders gute Anlage des Spannbandes 17 an den jeweiligen Schlauch, wenn der Bereich 44 des Spannbandes bis ungefähr zum Querschlitz 26, vorzugsweise bis nahe an den Quersteg 24 oder bis zum Anstoßen an diesen Quersteg 24 der Abkröpfung 23 des Spannbandes reicht.

**Patentansprüche**

1. Schlauchschelle mit einem metallischen Spannband und einem Spannschloß, das ein Gehäuse aufweist, an dessen Gehäuseboden ein Endbereich des Spannbandes gehalten ist, wobei der Gehäuseboden einen von dem Spannband durchdrungenen Querschlitz aufweist und das Spannband neben einer Längsseite dieses Querschlitzes an der Unterseite und neben der anderen Längsseite dieses Querschlitzes an der Oberseite des Gehäusebodens anliegt, an welchem Spannschloß eine mit einer Verzahnung des Spannbandes zu dessen Verstellung zusammenwirkende Spannschnecke drehbar gelagert ist, dadurch gekennzeichnet, daß das Spannband (17) einen einzigen, sich senkrecht zur Längsrichtung des Spannbandes erstreckenden Querschlitz (26) des Gehäusebodens mit einem Quersteg (24) durchdringt, daß dieser Quersteg (24) ungefähr senkrecht zur Längsrichtung des Gehäusebodens (18) gerichtet und durch zwei gegensinnige, ungefähr rechtwinklige Abwinkelungen des Spannbandes gebildet ist, deren der Höhe des Quersteges (24) entsprechender Abstand voneinander ungefähr der Dicke des Gehäusebodens (18) entspricht und so dieser Quersteg (24) des Spannbandes beim Spannen des Spannbandes durch die hierdurch auf das Spannband einwirkende Zugkraft an eine Wand (28) des Querschlitzes (26) angedrückt wird, und daß der durch den Querschlitz (26) hindurchgeführte Endbereich des Spannbandes (17) gegen Wegschwenken vom Gehäuseboden formschlüssig gehalten ist.

2. Schlauchschelle nach Anspruch 1, dadurch gekennzeichnet, daß eine formschlüssige Sicherung (16) am Gehäuse (12) vorgesehen ist, die den am Gehäuseboden (18) verankerten Endbereich (19) des Spannbandes (17) gegen Wegschwenken vom Gehäuseboden sichert.

3. Schlauchschelle nach Anspruch 2, dadurch gekennzeichnet, daß die Sicherung (16) zwischen dem Querschlitz (26) des Gehäusebodens (18) und dem freien Ende (19′) des am Gehäuseboden verankerten Endbereiches (19) des Spannbandes angeordnet ist.

4. Schlauchschelle nach Anspruch 3, dadurch gekennzeichnet, daß die Sicherung mindestens einen Lappen aufweist, der durch eine Stanzung in einer Gehäuselängsseitenwand gebildet und auf das Spannband umgebogen ist und/oder einen Lappen (16) des Gehäusebodens (18) aufweist, der ein Loch (15) des Spannbandes (17) durchdringt und auf das Spannband umgebogen ist.

5. Schlauchschelle nach einem der vorhergehenden Ansprüche, dadurch gekennzeichnet, daß der am Gehäuseboden (18) gehaltene Endbereich (19) des Spannbandes (17) um das rückwärtige Ende (18′) des Gehäusebodens (18) um ungefähr 180° hakenförmig umgebogen ist.

6. Schlauchschelle nach einem der vorhergehenden Ansprüche, dadurch gekennzeichnet, daß die die Abkröpfung (23) des betreffenden Spannbandendbereiches (19) bildenden gegensinnigen Abwinklungen dieses Spannbandendbereiches im ungefähr der Höhe des Querschlitzes (26) des Gehäusebodens (18) entsprechenden Abstand voneinander vorgesehen sind und/oder daß die Breite des Querschlitzes (26) des Gehäusebodens (18) nur wenig größer als die Dicke des Spannbandes (17) ist.

7. Schlauchschelle nach einem der vorhergehenden Ansprüche, dadurch gekennzeichnet, daß das Spannband (17) aus Stahl besteht.

8. Schlauchschelle nach einem der vorhergehenden Ansprüche, dadurch gekennzeichnet, daß das Spannband (17) elastisch biegsam ist.

9. Schlauchschelle nach einem der Ansprüche 1-7, dadurch gekennzeichnet, daß das Spannband (17) im wesentlichen unelastisch biegsam ist.

10. Schlauchschelle nach einem der vorhergehenden Ansprüche, dadurch gekennzeichnet, daß die Dicke des Spannbandes 0,4 bis 1,5 mm und/ oder die Breite des Spannbandes 5 bis 20 mm beträgt.

11. Schlauchschelle nach einem der vorhergehenden Ansprüche, dadurch gekennzeichnet, daß das Spannband (17) in Richtung auf das rückwärtige Ende (18′) des Gehäusebodens (18) den Querschlitz (26) des Gehäusebodens von der Unterseite dieses Gehäusebodens kommend durchdringt.

12. Schlauchschelle nach Anspruch 5, dadurch gekennzeichnet, daß der um das rückwärtige Ende (18′) des Gehäusebodens (18) umgebogene Bereich (44; 43′) des Spannbandes (17) bis ungefähr zum Querschlitz (26) des Gehäusebodens reicht.

13. Schlauchschelle nach einem der vorhergehenden Ansprüche, dadurch gekennzeichnet, daß die Längsseitenwände des Querschlitzes (26) zueinander nicht höhenversetzt sind.

**Revendications**

1. Collier de serrage comprenant une bande de serrage métallique et un tendeur de serrage qui comporte une enveloppe sur le fond de laquelle est maintenue une région d'extrémité de la bande de serrage, cependant que le fond de l'enveloppe comporte une fente transversale traversée par la bande de serrage et que la bande de serrage repose sur la face inférieure du fond de l'enveloppe à côté d'un bord longitudinal de cette fente transversale et sur sa face supérieure à côté de l'autre bord longitudinal de cette fente transversale, tendeur de serrage sur lequel est montée tournante une vis sans fin de serrage coopérant avec une denture de la bande de serrage pour le déplacement de celleci, caractérisé par le fait que la bande de serrage (17) traverse par une bande transversale (24) une fente transversale unique (26) du fond de l'enveloppe qui s'étend perpendiculairement à la direction longitudinale de la bande de serrage, par le fait que cette bande transversale (24) est dirigèe à peu près perpendiculairement à la direction longitudinale du fond (18) de l'enveloppe et qu'elle est formée par deux pliages de la bande de serrage en sens inverses et à peu près à angle droit dont la distance entre eux, laquelle correspond à la hauteur de la bande transversale (24), correspond à peu près à l'épaisseur du fond (18) de l'enveloppe, cette bande transversale (24) de la bande de serrage étant ainsi serrée sur une paroi (28) de la fente transversale (26) par la force de traction qui s'exerce ainsi sur la bande de serrage lorsque l'on serre la bande de serrage, et par le fait que la région de l'extrémité de la bande de serrage (17) que l'on fait passer à travers la fente transversale (26) est maintenue par conjugaison des formes pour empêcher son enlèvement par pivotement du fond de l'enveloppe.

2. Collier de serrage selon la revendication 1, caractérisé par le fait qu'il est prévu sur l'enveloppe (12) une sécurité par conjugaison des formes (16) pour empêcher la région d'extrémité (19) de la bande de serrage (17) qui est ancrée sur le fond (18) de l'enveloppe de quitter par pivotement le fond de l'enveloppe.

3. Collier de serrage selon la revendication 2, caractérisé par le fait que la sécurité (16) est disposée entre la fente transversale (26) du fond (18) de l'enveloppe et l'extrémité libre (19') de la région d'extrémité (19) de la bande de serrage qui est ancrée sur le fond de l'enveloppe.

4. Collier de serrage selon la revendication 3, caractérisé par le fait que la sécurité comporte au moins une patte qui est constituée par un estampage ménagé dans une paroi latérale longitudinale de l'enveloppe et qui est repliée sur la bande de serrage et/ou une patte (16) du fond (18) de l'enveloppe qui traverse un trou (15) de la bande de serrage (17) et qui est repliée sur la bande de serrage.

5. Collier de serrage selon l'une des revendications précédentes, caractérisé par le fait que la region d'extrémité (19) de la bande de serrage (17) qui est maintenue sur le fond (18) de l'enveloppe est repliée de 180° environ en forme de crochet autour de l'extrémité arrière (18') du fond (18) de l'enveloppe.

6. Collier de serrage selon l'une des revendications précédentes, caractérisé par le fait que les pliages en sens inverses de la région concernée (19) de l'extrémité de la bande de serrage qui constituent la partie coudée (23) de cette région d'extrémité de la bande de serrage sont prévus à une distance l'un de l'autre qui correspond environ à la hauteur de la fente transversale (26) du fond (18) de l'enveloppe et/ou par le fait que la largeur de la fente transversale (26) du fond (18) de l'enveloppe n'est que faiblement supérieure à l'épaisseur de la bande de serrage (17).

7. Collier de serrage selon l'une des revendications précédentes, caractérisé par le fait que la bande de serrage (17) est en acier.

8. Collier de serrage selon l'une des revendications précédentes, caractérisé par le fait que la bande de serrage (17) présente une flexibilité élastique.

9. Collier de serrage selon l'une des revendications 1 à 7, caractérisé par le fait que la bande de serrage (17) présente une flexibilité pour l'essentiel non élastique.

10. Collier de serrage selon l'une des revendications précédentes, caractérisé par le fait que l'épaisseur de la bande de serrage est de 0,4 à 1,5 mm et/ou que la largeur de la bande de serrage est de 5 à 20 mm.

11. Collier de serrage selon l'une des revendications précédentes, caractérisé par le fait que la bande de serrage (17), dans la direction de l'extrémité arrière (18') du fond (18) de l'enveloppe, traverse la fente transversale (26) du fond de l'enveloppe en provenant de la face inférieure de ce fond de l'enveloppe.

12. Collier de serrage selon la revendication 5, caractérisé par le fait que la région (44; 43') de la bande de serrage (17) qui est repliée autour de l'extrémité arrière (18') du fond (18) de l'enveloppe arrive à peu près jusqu'à la fente transversale (26) du fond de l'enveloppe.

13. Collier de serrage selon l'une des revendications précédentes, caractérisé par le fait que les parois latérales longitudinales de la fente transversale (26) ne sont pas décalées en hauteur l'une par rapport à l'autre.

**Claims**

1. A hose clip with a metallic tightening strap and a tension lock with a housing on whose housing base an end area of the tightening strap is held, this housing base having a tranverse groove penetrated by the tightening strap which alongside one longitudinal side of this transverse groove abuts against the underside of this housing base and alongside another longitudinal side of this longitudinal groove abuts against the upper side of the housing base, a tightening screw being rotatably mounted on this tension lock and cooperating with a toothing of the tightening strap in order to displace the latter, characterized in that the tightening strap (17) penetrates, by means of a crossbar (24), a single transverse groove (26) which is in the housing base and extends perpendicular to the longitudinal direction of the tightening strap, in that this crossbar (24) is directed approximately perpendicular to the longitudinal direction of the housing base (18) and is formed by two opposing, approximately right-angled bends in the tightening strap whose distance from one another, which approximately corresponds to the height of the crossbar (24), approximately corresponds to the thickness of the housing base (18) and thus when the tightening strap is tensioned this tightening strap cross bar (24) is pressed against a wall (28) of the transverse groove (26) by means of the traction thereby bearing upon the tightening strap, and in that the tightening-strap (17) end-area which is guided through the transverse groove (26) is held in a form-locking manner to prevent it swinging away from the housing base.

2. A hose clip in accordance with Claim 1, characterized in that a form-locking securing device (16) is foreseen on the housing (12), this securing device securing the end area (19), which is anchored to the housing base (18), of the tightening strap (17) to prevent it swinging away from the housing base.

3. A hose clip in accordance with Claim 2, characterized in that the securing device (16) is arranged between the transverse groove (26) of the housing base (18) and the free end (19') of the end area (19) of the tightening strap, which end area (19) is anchored to the housing base.

4. A hose clip in accordance with Claim 3, characterized in that the securing device has at least one flap which is formed by a stamping on a housing longitudinal side wall and is bent over onto the tightening strap, and/or has a housing-base (18) flap (16) which penetrates a hole (15) in the tightening strap (17) and is bent over onto the tightening strap.

5. A hose clip in accordance with any one of the preceding Claims, characterized in that the tightening-strap (17) end-area (19) which is held on the housing base (18), is bent around the rear end (18') of the housing base (18), bending through approximately 180° in a hook-shaped manner.

6. A hose clip in accordance with any one of the preceding Claims, characterzied in that the opposing bends of this tightening-strap area, which bends form the elbow (23) of the tightening-strap end-area (19) in question, are at a distance from one another which approximately corresponds to the height of the transverse groove (26) in the housing base (18), and/or in that the width of the transverse groove (26) in the housing base (18) is only slightly greater than the thickness of the tightening strap (17).

7. A hose clip in accordance with any one of the preceding Claims, characterized in that the tightening strap (17) is made of steel.

8. A hose clip in accordance with any one of the preceding Claims, characterized in that the tightening strap (17) is elastically flexible.

9. A hose clip in accordance with any one of Claims 1-7, characterized in that the tightening strap (17) is, in the main, unelastically flexible.

10. A hose clip in accordance with any one of the preceding Claims, characterized in that the tightening strap is 0.4 to 1.5 mm thick and/or is 5 to 20 mm wide.

11. A hose clip in accordance with any one of the preceding Claims, characterized in that penetration of the transverse groove (26) in the housing base by the tightening strap (17) takes place in the direction of the rear end (18) of the housing base (18) and from the underside of this housing base.

12. A hose clip in accordance with Claim 5, characterized in that the area (44; 43') of the tightening strap (17) which is bent around the rear end (18') of the housing base (18) extends to the transverse groove (26) of the housing base.

13. A hose clip in accordance with any one of the preceding Claims, characterized in that the longitudinal side walls of the transverse groove (26) are not offset in relation to one another as regards their height.

FIG.2

FIG.6

FIG.1

FIG.3

FIG.5

FIG.4